# EUROPEAN PATENT APPLICATION

(11) **EP 1 792 838 A1**
(43) Date of publication of application: **06.06.2007**
(21) Application number: 05111531.9
(22) Date of filing: 30.11.2005
(51) Int. Cl.: B65D 33/18, B31B 23/00, B65B 9/22, B29C 65/02

(54) **Envelope-shaped packaging bag**

(71) Applicant: CFS Weert B.V., 6000 AG Weert (NL)
(72) Inventor: Caris, Frank Theodorus Catharina, 6002 CT Weert (NL); Van Gulik, Rudolf Adrianus, 6051 CJ Maasbracht (NL); Hendriks, Peter Joseph, 6005 KJ Weert (NL)
(74) Representative: Wolff, Felix

(57) **Abstract**

The present invention is related to an envelope-shapep packaging bag with two cross-seals and a longitudinal seal. Furthermore, the present invention is related to a packaging machine.

## Description

The present invention is related to an envelope-shaped packaging bag with two cross-seals and a longitudinal seal. Furthermore, the present invention is related to a packaging machine.

Packaging items like sweets or the like are nowadays packaged into packaging bags. They have to maintain the freshness of the packaging item and prolong their shelf life. Furthermore, these packaging bags have to be optically appealing.

It was therefore the objective of the present invention to provide a packaging bag that meets the above-mentioned requirements.

This objective is solved by an envelope-shaped packaging bag with two cross-seals and a longitudinal seal, whereas it comprises a flap, which is located below the longitudinal seal, which is attached to the bag with a peelable seal and which can be, after opening the peelable seal, reclosed with an adhesive.

It was totally surprising and could not have been expected by a person skilled in the art that the inventive packaging bag is easily manufactured and that it can be opened easily. The packaging bag of the present invention has the advantage that it is reclosed after its initial opening. In a preferred embodiment, the inventive packaging bag is a stand-up packaging bag.

The packaging bag according to the present invention comprises two cross-seals and a longitudinal seal which are of a permanent type and consequently not peelable, respectively. Furthermore, the packaging bag comprises a flap that is located below the longitudinal seal and that is attached to the bag via a peelable seal. The inventive packaging bag is opened for the first time by opening the peelable seal. Subsequently, packaging items can be removed from the packaging bag via an opening area which is covered by the flap. The inventive packaging bag is reclosed by means of an adhesive, preferably an adhesive tape, which is preferably initially covered by a protective film.

The protective film is removed from the adhesive in order to reattach the flap to the packaging bag.

Preferably, the inventive packaging bag comprises a recess above or on the longitudinal seal. This recess can be used to present the packaging bag in the store pendulously. Preferably, the recess is shaped as a so-called Euro-hole or as a round shaped hole. In another preferred embodiment of the packaging bag, the recess is located between two longitudinal seals or on the longitudinal seal. All preferred placements of the recess have the advantage that the packaging bag is gastight and remains gastight even if the recess expands during use of the packaging bag.

In a further preferred embodiment of the present invention, the packaging bag comprises at least one gusset, preferably two gussets, at the bottom of the packaging bag. Especially the preferred embodiment with two gussets allows to use the packaging bag as a stand-up packaging bag. In an even further preferred embodiment of the present invention, the gussets comprise a tip-seal in order to achieve a distinct plate at the tip of the gussets, which improves the stand-up performance.

Another subject matter of the present invention is a packaging machine, to produce a packaging bag according to the present invention, which comprises a forming shoulder that forms the planar film into a film tube, a filling tube to fill packaging items into the film tube, sealing means to apply the longitudinal seal to the film tube and sealing means to apply the peelable seal to the film tube, whereas the filling tube comprises a fin and whereas the sealing means makes use of the fin to apply the peelable seal to the film tube, while the permanent seal is applied to the film tube without the fin.

The inventive packaging machine is produced and operated easily. The inventive packaging machine allows a commercially very competitive production of the inventive packaging bag.

The longitudinal, permanent seal is for example applied by two sealing jaws which are heated and which apply a certain pressure to the film in order to seal the flap to the packaging bag.

In a preferred embodiment, the inventive packaging machine comprises means to apply an adhesive to the film tube. Preferably, these means also work together with the fin.

Preferably the fin works as an abutment for the sealing means that apply the peelable seal and/or for the means that apply the adhesive.

In another preferred embodiment, the inventive packaging machine comprises means to apply an adhesive to the film tube whereas these means work together with the film tube. In this case the filling tube works as an abutment for the means that apply the adhesive.

Another subject matter of the present invention is a packaging machine to produce a packaging bag that comprises a forming shoulder that forms the planar film into a film tube, a filling tube to fill packaging items into the film tube, sealing means to apply the longitudinal seal to the film tube and sealing means to apply the peelable seal to the film tube, whereas the sealing means to apply the peelable seal to the film tube makes use of the filling tube, while the permanent seal is applied to the bag without the filling tube.

The longitudinal, permanent seal is for example applied by two sealing jaws which are heated and which apply a certain pressure to the film in order to seal the flap to the packaging bag.

Preferably, the inventive packaging machine comprises means to apply an adhesive to the bag whereas these means work together with the filling tube.

Preferably the filling tube works as an abutment for the sealing means that apply the peelable seal and/or the means that apply the adhesive to the film tube.

According to a preferred embodiment of this packaging machine or the above-mentioned inventive packaging machine, it comprises cross-sealing means to apply cross-seals to the packaging bag.

Another subject matter of the present invention is a packaging machine to produce a packaging bag that comprises a forming shoulder that forms the planar film into a film tube, a filling tube to fill packaging items into the film tube, sealing means to apply the longitudinal seal to the film tube, sealing means to apply the peelable seal to the film tube, transportation means to transport the film tube along the filling tube and cross-sealing-means to apply cross-seals to the film tube, whereas the cross sealing means can be used to transport the film tube and that the transportation means are removable.

Preferably, the transportation means are fixed to the packaging machine by quick release fasteners.

Preferably, the position of the sealing means relative to the filling tube can be reversibly altered.

In another preferred embodiment, the transportation means of the packaging machines are height-adjustable.

The following description is related to all inventive packaging machines.

Preferably, the packaging machine comprises means to apply a recess to the packaging bag, whereas more preferably, these means are located downstream of the sealing means.

In an even more preferred embodiment of the present invention, the packaging machine comprises means to apply one or more gusset(s) to the packaging bag, which is even more preferably located downstream of the means to apply a recess to the packaging bag.

The present inventions are now described in further details according to figures 1 to 5, whereas:
- **Figures 1a - 1c**: depict three embodiments of the inventive packaging bags in a sideview.
- **Figures 2a - 2b**: depict two preferred embodiments of the inventive packaging bag in a front-view.
- **Figures 3a - 3c**: show details of the filling tube to produce the inventive packaging bag.
- **Figures 4a - 4b**: show two embodiments of an inventive packaging machine, and
- **Figure 5**: shows height-adjustable transportation means.

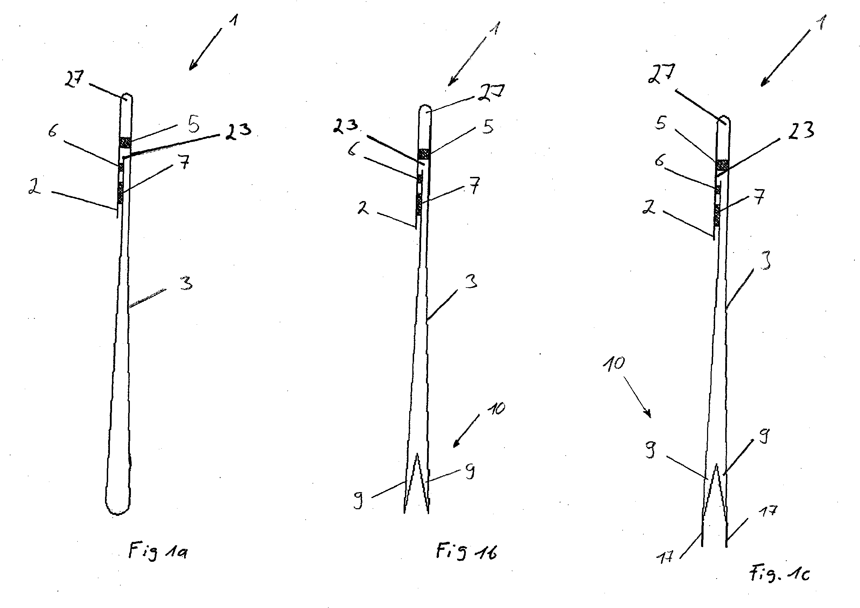

**Figure 1a** shows one embodiment of the inventive envelope-shaped packaging bag 1 which comprises a film bag 3 into which the packaging item is filled. At its top, the envelope-shaped packaging bag comprises a flap 2 which is permanently sealed to the film bag 3 via the longitudinal seal 5. Furthermore, the flap is attached to the film bag 3 by a peelable seal 6. An adhesive layer 7, which is covered by a protective film (not depicted), is also located between the flap 2 and the bag 3. The inventive packaging bag is opened by pulling the flap 2 such that the peelable seal 6 is opened. Under the flap 2, an opening area 23 is located via which the packaging items (not depicted) can be removed from the film bag 3. After the packaging bag 1 has been initially opened, the protective film (not depicted) on the adhesive layer 7 is removed and the flap 2 can be reattached to the packaging bag via the adhesive layer 7.

In **figure 1b,** the packaging bag according to figure 1 a is shown which comprises according to this embodiment of the present invention two gussets 9 at the bottom 10 of the film bag 3.

In **figure 1c,** the packaging bag according to figure 1b is depicted which comprises in this embodiment of the present invention additionally two seals 17 at the tips of the gussets.

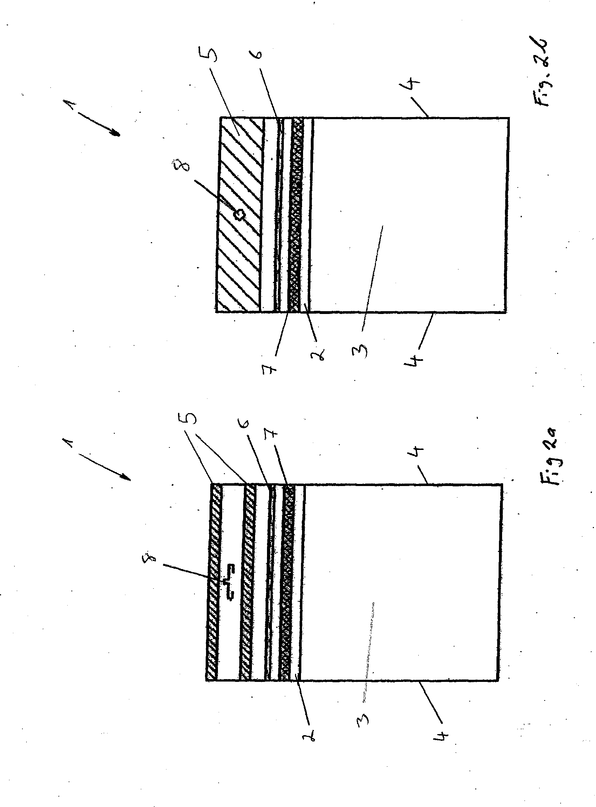

In **figure 2a**, another embodiment of the present invention is shown. The envelope-shaped bag according to figure 2a corresponds essentially to the bags shown in **figures 1a - 1c.** However, in the present example, the packaging bag comprises two longitudinal permanent seals 5 and a recess 8 between the two longitudinal seals that is shaped as a Euro-hole so that the inventive packaging bag 1 can be presented in a pendulous mode. A person skilled in the art understands that the hole must extend through the flap 2 and through the film bag 3. The insertion of the hole 8 between two permanent seals 5 prevents the destruction of the flap 2 during the use of the packaging bag 1.

In **figure 2b,** another embodiment of the inventive packaging envelope-shaped packaging bag is shown. Again, this packaging bag essentially corresponds to the packaging bags shown in **figures 1a - 1c.** However, in the present preferred embodiment, the packaging bag comprises one relatively broad longitudinal, permanent seal into which a recess 8 is punched. The recess in the present example has a round shape into which a rod can be inserted so that this packaging bag can be presented in a hanging mode. The insertion of the hole 8 into the longitudinal seal 5 prevents that the hole enlarges during the use of the packaging bag.

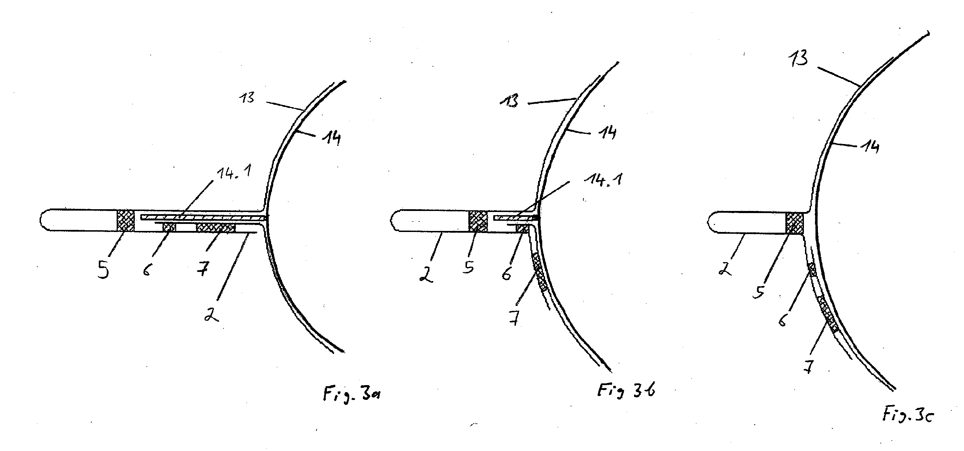

In **figure 3a,** the filling tube 14 of a packaging machine is partially depicted which allows the production of the inventive packaging bag. Attached to the filling tube 14 is a fin 14.1. The inventive packaging bag 1, which is essentially made from the film tube 13, can be produced by applying the peelable film 6 and the adhesive 7 in cooperation with the fin 14.1, which works as an abutment for the sealing means (not depicted) which apply the peelable seal 6 and the means (not depicted) to apply the adhesive layer 7. The permanent seal 5 is applied without the fin 14.1, for example by two sealing jaws (not depicted) which are heated and which push the flap 2 and film bag 3 together. This embodiment of the inventive packaging machine allows especially the production of packaging bags with a relatively small volume of the film bag 3, i.e. for a small amount of packaging items.

The packaging machine according to **figure 3b** corresponds essentially to the packaging machine according to figure 3a. However, in the present embodiment of the inventive packaging machine, the fin 14.1 is smaller and the adhesive is attached to the packaging bag 1 with the filling tube 14 as an abutment for the sealing means (not depicted), and not with the fin 14.1. This embodiment of the present invention allows especially the production of packaging bags with a mid-size volume, i. e. with a larger volume than the packaging bags which can be produced with a packaging machine according to figure 3a. The permanent, longitudinal seal 5 is produced as described according to figure 3a.

The packaging machine according to **figure 3c** allows the production of packaging bags with an even larger volume of the film bag 3. This embodiment of the inventive packaging machine does not comprise a fin 14.1 at all, but the peelable seal 6 and the adhesive 7 are both applied to the packaging bag with the film tube as an abutment for the sealing means that apply the peelable seal 6 and the means that apply the adhesive layer 7. The permanent, longitudinal seal 5 is produced as described according to figure 3a.

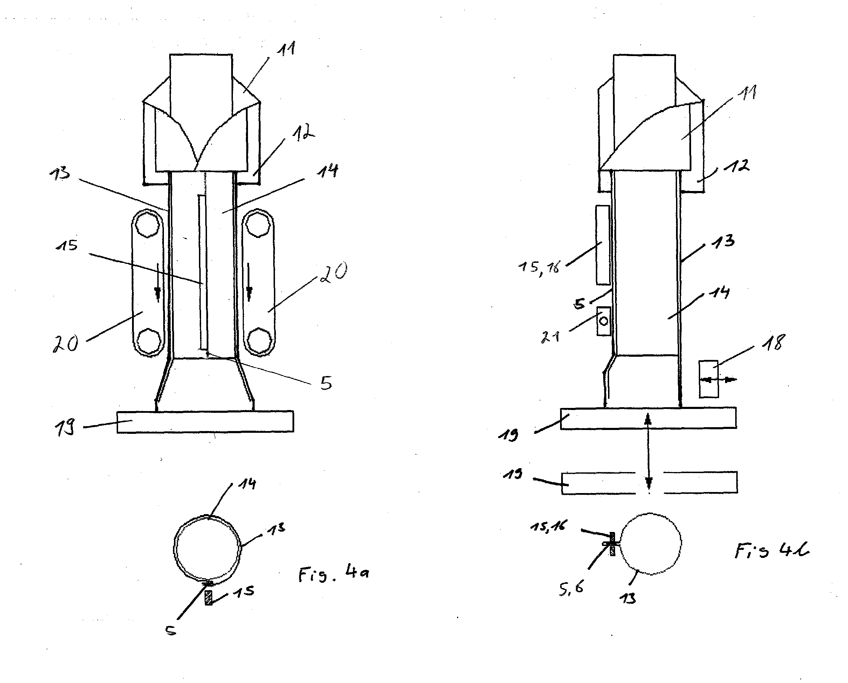

**Figures 4a and 4b** show embodiments of a packaging machine which can be alternatively realized with a packaging machine according to the present invention.

The left embodiment of the packaging machine comprises a form shoulder 11 which converts a flat film 12 into a film tube 13 which is transported along a filling tube 14 through which the packaging items (not depicted) are filled into the film tube 13. The transportation is achieved by transportation belts 20. While the film tube 13 moves along the filling tube 14, a longitudinal seal 5 is applied to the film tube by longitudinal sealing means 15. Downstream of the transportation means 20, cross-sealing means 19 are located.

According to the present invention the transportation belts 20 can be removed from the packaging machine. Furthermore, the longitudinal sealing means 15 can be shifted around the circumference of the filling tube 14. Additionally, the cross-sealing means 19 are vertically shiftable so that they can be used to draw the film along the film tube 13 along the filling tube 14 during the application of the cross-seals.

Especially the removal of the transportation belts 20 allows the realization of a machine according to figure 4b with a relatively small height.

Consequently, the machine according to figure 4a can be transformed into a packaging machine according to figure 4b and vice versa. as depicted in figure 4b. The packaging machine according to figure 4b comprises an asymmetric forming shoulder so that the longitudinal seal is not placed in the center of the filling tube, but is located at the lefthand side. In the present example adjacent to the longitudinal sealing means 15, sealing means to apply a peelable seal are also located. Downstream of the longitudinal sealing means 15, 16, a punch 21 for the application of a recess, for example a Euro-hole or a round-shaped hole, adjacent to the film tube is located. Even further downstream, means 18 are located to apply to gussets to the film tube 13. This is achieved by moving the tool 18 back and forth as depicted by the double arrow. Via the cross-sealing means 19, cross-seals are applied to the film tube. These cross-sealing means are vertically shiftable as also depicted by a double arrow, so that the cross-sealing means can be used to move the film tube 13 along the filling tube 14.

The person skilled in the art understands that the machine according to figure 4b can be converted into a machine according to figure 4a and vice versa.

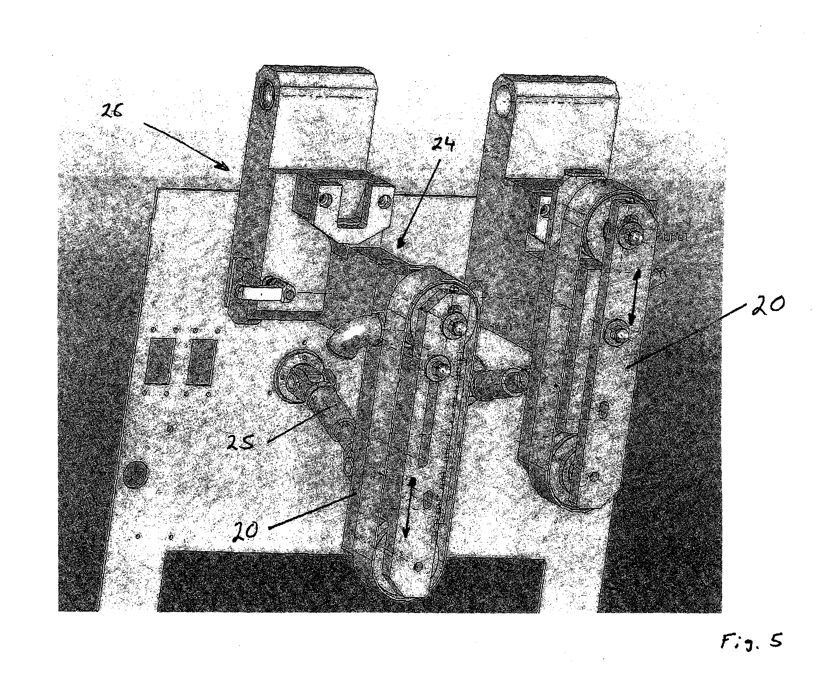

**Figure 5** shows a detail of the transportation belts 20 which are in the present embodiment of the inventive packaging machine height-adjustable as depicted by the two double arrows. For the height-adjustments, the packaging machine comprises a guiding 24 which is in the present example designed as a tongue and groove joint. Furthermore, the transportation does comprise a flexible drive shaft 25 which is operated by a motor (not depicted) for actuating the belts of the transportation belt. The person skilled in the art understands that the transportation belts 20 are fixed packaging machine by means of a quick release fastener 26 to easily remove the transportation belts from the packaging machine.

### Reference signs

- 1: packaging bag
- 2: a flap
- 3: film bag
- 4: cross-seals
- 5: longitudinal seals
- 6: peelable seal
- 7: adhesive
- 8: recess
- 9: gussets
- 10: bottom
- 11: forming shoulder
- 12: planar film
- 13: film tube
- 14: filling tube
- 14.1: fin
- 15: longitudinal sealing means for a permanent seal
- 16: sealing means to apply the peelable seal
- 17: tip seal
- 18: gusset forming means
- 19: cross-seals
- 20: transportation belts
- 21: punch
- 22: -
- 23: opening area
- 24: guiding
- 25: drive shaft
- 26: release fastener

## Claims

1. Envelope-shaped packaging bag (1) with two cross-seals (4) and a longitudinal seal (5), **characterized in, that** it comprises a flap (2), which is located below the longitudinal seal, which is attached to the bag (3) with a peelable seal (6) and which can be, after opening the peelable seal (6), reclosed with an adhesive (7).

2. Envelope-shaped packaging bag (1) according to claim 1, **characterized in that** it comprises a recess (8) above or on the longitudinal seal.

3. Envelope-shaped packaging bag (1) according to claim 1, **characterized in that** it comprises a recess (8) between two longitudinal seals (5).

4. Envelope-shaped packaging bag (1) according to one of the preceding claims, **characterized in, that** it comprises a gusset (9) at the bottom (10).

5. Envelope-shaped packaging bag (1) according to claim 1, **characterized in that** the gussets comprise a tip-seal (17).

6. Packaging machine to produce a packaging bag (1) according to one of the preceding claims, that comprises a forming shoulder (11) that forms the planar film (12) into a film tube (13) and a filling tube (14) to fill packaging items into the film tube (13), sealing means (15) to apply the longitudinal seal (5) to the film tube and sealing means (16) to apply the peelable seal (6) to the film tube, **characterized in, that** the filling tube (14) comprises a fin (14.1) and that the sealing means (16) makes use of the fin (14.1) to apply the peelable seal (6) to the film tube (13) while the permanent seal is applied to the film tube (13) without the fin (14.1).

7. Packaging machine according to claim 6, **characterized in, that** it comprises means to apply an adhesive (7) to the film tube (13) and that these means work together with the fin (14.1).

8. Packaging machine according to claim 6, **characterized in, that** it comprises means to apply an adhesive (7) to the film tube (13) and that these means work together with the filling tube (14).

9. Packaging machine to produce packaging bag (1) according to one of the preceding claims, that comprises a forming shoulder (11) that forms the planar film (12) into a film tube (13) and a filling tube (14) to fill packaging items into the film tube (13), sealing means (15) to apply the longitudinal seal (5) to the film tube (13) and sealing means (16) to apply the peelable seal (6) to the film tube (13), **characterized in that** the sealing means (16) to apply the peelable seal (6) to the film tube (13) makes use of the filling tube (14), while the permanent seal is applied to the bag without the filling tube (14).

10. Packaging machine according to claim 9, **characterized in, that** it comprises means to apply an adhesive (7) to the bag and that these means work together with the filling tube (14).

11. Packaging machine according to one of the preceding claims, **characterized in, that** it comprises cross-sealing-means (19) to apply cross-seals (4) to the packaging bag.

12. Packaging machine to produce packaging bag (1) that comprises a forming shoulder (11) that forms the planar film (12) into a film tube (13) and a filling tube (14) to fill packaging items into the film tube (13), sealing means (15) to apply the longitudinal seal (5) to the film tube (13) and transportation means (20) to transport the film tube (13) along the filling tube (14) and cross-sealing-means (19) to apply cross-seals (4) to the film tube (13), **characterized in that** the cross sealing means (19) can be used to transport the film tube (13) and that the transportation means (20) are removable.

13. Packaging machine according to claim 12, **characterized in, that** the position of the sealing means (15) relative to the filling tube can be reversibly altered.

14. Packaging machine according to claim 12 or 13, **characterized in, that** the transportation means are height adjustable.

15. Packaging machine according to one of the preceding claims, **characterized in, that** packaging machine according to one of the preceding claims, **characterized in, that** it comprises means (21) to apply a recess (8) to the packaging bag (1).

16. Packaging machine according to claim 15, **characterized in, that** the means (21) are located downstream of the sealing means (15, 16).

17. Packaging machine according to one of the preceding claims, **characterized in, that** it comprises means (18) to apply a gusset to the packaging bag (1), which are preferably located downstream of the means (17) to apply a recess (8) to the packaging bag (1).
